# EUROPEAN PATENT APPLICATION

(11) **EP 4 046 517 A1**
(43) Date of publication of application: **24.08.2022**
(21) Application number: 19952955.3
(22) Date of filing: 20.11.2019
(51) Int. Cl.: A43B 13/04

(54) **MEMBER FOR SHOES, AND SHOE**

(71) Applicant: ASICS Corporation, Kobe-shi Hyogo 650-8555 (JP)
(72) Inventor: TATEISHI, Junichiro, Kobe-shi, Hyogo 650-8555 (JP)
(74) Representative: Stolmár & Partner Patentanwälte PartG mbB
(86) International application number: PCT/JP2019/045417
(87) International publication number: WO 2021/100137

(57) **Abstract**

In order to provide a shoe member excellent in strength, the shoe member is composed of a polymer composition that includes cellulose nanofibers and one or more of inorganic fillers selected from the group consisting of magnesium carbonate particles, calcium carbonate particles, silica particles, and talc particles.

## Description

### FIELD

The present invention relates to a shoe member and a shoe, more specifically, a shoe member composed of a polymer composition, and a shoe including such a shoe member.

### BACKGROUND

A shoe member such as an outsole or a midsole which forms a shoe sole is composed of, for example, a polymer composition. For the demand for reduction of the shoe weight, consideration has been conventionally made on reducing the thickness of the shoe member and reducing the specific gravity of the shoe member. Thus, an attempt has been made to achieve a low specific gravity of the shoe member by having the shoe member formed by a foam that is composed of a polymer composition. The shoe member having a low specific gravity formed in this way generally has a reduced strength compared with a shoe member composed of the same polymer composition but configured to be held in the non-foamed state. When the thickness of the shoe member is reduced to reduce the weight of the shoe member, the strength of the shoe member is generally lowered regardless of whether the shoe member is in the foamed state or the non-foamed state. Therefore, the shoe member composed of a polymer composition containing fibers has been considered in order to satisfy both of the strength and the lightweight properties (Patent Literatures 1 and 2 below).

### CITATION LIST

### Patent Literature

Patent Literature 1: WO 2014/178137 A
Patent Literature 2: WO 2016/159081 A

### SUMMARY

### Technical Problem

Although a shoe member including fibers has been demanded to have further improved strength, the shoes member satisfying the demand is still not provided. Therefore, it is an object of the present invention to satisfy this demand and to provide a shoe member excellent in strength.

### Solution to Problem

In order to solve the problem, the present invention provides a shoe member composed of a polymer composition, wherein the polymer composition includes at least one or more of polymers, at least one or more of cellulose nanofibers, and at least one or more of inorganic fillers, and the polymer composition includes one or more of the inorganic fillers selected from the group consisting of magnesium carbonate particles, calcium carbonate particles, silica particles, and talc particles.

### BRIEF DESCRIPTION OF DRAWINGS

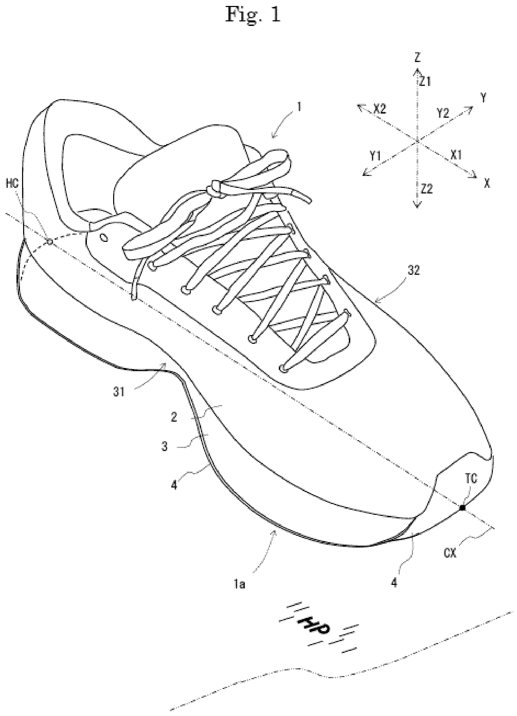

Fig. 1 is a schematic perspective view showing a shoe including a shoe member of an embodiment of the present invention.

### DESCRIPTION OF EMBODIMENTS

Hereinafter, a shoe member of the present invention will be described by way of embodiments. Fig. 1 shows a shoe that is at least partially composed of a shoe member of this embodiment. The shoe 1 includes an upper 2 and a shoe sole member. The shoe 1 includes a midsole 3 and an outsole 4 as the shoe sole member.

Hereinafter, when a description is given on, for example, the shoe 1 shown in Fig. 1, a direction along a shoe center axis CX connecting a heel center HC and a toe center TC may be referred to as a length direction X. Among directions along the shoe center axis CX, a direction X1 directed from the heel to the toe may be referred to as, for example, a forward direction, and a direction X2 directed from the toe to the heel may be referred to as, for example, a rearward direction. Among directions orthogonal to the shoe center axis CX, a direction parallel to a horizontal plane HP may be referred to as, for example, a width direction Y. Regarding the width direction Y, a direction Y1 directed to the first toe side may be referred to as, for example, a medial side direction, and a direction Y2 directed to the fifth toe side may be referred to as, for example, a lateral side direction. A vertical direction Z orthogonal to the horizontal plane HP may be referred to as a thickness direction or a height direction. Further, hereinafter, a direction Z1 directed upward in this vertical direction Z may be referred to as an upward direction, and a direction Z2 directed downward may be referred to as a downward direction.

As shown in Fig. 1, the shoe 1 of this embodiment includes the outsole 4 in its bottommost position. The outsole 4 constitutes the ground engaging surface of the shoe 1. The shoe 1 includes the midsole 3 between the outsole 4 and the upper 2 that covers a foot of a wearer from the upper side. The midsole 3 of this embodiment has a flat shape, and is arranged so that the thickness direction thereof corresponds to the height direction Z of the shoe. A lower surface of the midsole 3 is in contact with an upper surface of the outsole 4, and an upper surface of the midsole 3 is in contact with the upper 2 from below. Side portions 31, 32 of the midsole are in an exposed state without being covered with, for example, the upper 2 or the outsole 4. That is, the midsole 3 of this embodiment includes the side portions 31, 32 constituting an outer surface of the shoe 1.

In the shoe 1 of this embodiment, the shoe member constituting part of the shoe 1 is composed of a polymer composition, and the polymer composition includes at least one or more of polymers, at least one or more of cellulose nanofibers, and at least one or more of inorganic fillers. Further, the polymer composition includes one or more of the inorganic fillers selected from the group consisting of magnesium carbonate particles, calcium carbonate particles, silica particles, and talc particles. The shoe 1 of this embodiment includes the midsole as the shoe member composed of the polymer composition. The shoe member composed of the polymer composition can be the outsole 4 or a shoe member that is not specifically described above. Examples of the shoe member include a member referred to as a heal counter disposed at a rear end of the shoe to cover the heel from the back side and a member referred to as a shank disposed at an intermediate portion in the length direction of the shoe to cover the arch.

In this embodiment, the midsole 3 is preferably formed by a foam in order to exhibit an effect of reducing the weight of the shoe 1. That is, it is preferable that the foam forming the midsole 3 include a plurality of cells each including a bubble and a film surrounding the bubble, and the film be composed of the polymer composition. The foam can include a large number of independent bubbles each of which is completely independent from the surrounding bubbles by the membrane or can include a large number of continuous bubbles in which a film between the adjacent cells is imperfect so that the bubbles of the adjacent cells are connected to each other. The higher the ratio of the independent bubbles, the more the foam exhibits an excellent strength and a high rebound resilience. The higher the ratio of the continuous bubbles, the more the foam exhibits an excellent flexibility and a high cushioning performance. The midsole 3 of this embodiment formed by a foam that is composed of the aforementioned polymer composition can still exhibit an excellent strength even if it is formed by a foam having a low specific gravity.

The midsole 3 of this embodiment preferably has an Asker C hardness of 80 or less in order to exhibit excellent cushioning properties. The aforementioned Asker C hardness is more preferably 70 or less. The midsole 3 preferably has an Asker C hardness of 10 or more, more preferably 20 or more in order to exhibit a suitable rebound resilience. The Asker C hardness herein means an instantaneous value when a Type C spring hardness test according to JIS K7312 is performed at 23 °C.

The lower the elastic modulus, the more the midsole 3 of this embodiment is excellent in the cushioning properties. When the elastic modulus is excessively low, the midsole 3 of this embodiment may be unable to fully absorb the shock the foot receives from the ground during walking. For such a reason, the elastic modulus (the compression elastic modulus) of the midsole is preferably 0.1 MPa or more, more preferably 0.5 MPa or more, particularly preferably 1.0 MPa or more, still more particularly preferably 1.5 MPa or more. The elastic modulus of the midsole (the compression elastic modulus) is preferably 20 MPa or less, more preferably 12 MPa or less, particularly preferably 8 MPa or less, still more particularly preferably 4 MPa or less.

The elastic modulus of the midsole can be calculated by an inclination of a stress - strain curve in a low strain region (for example, the inclination of a stress/strain curve between two strain points corresponding to ε1 = 0.05% and ε2 = 0.25%) according to a tensile test JIS K6251:2017 "Rubber, vulcanized and thermoplastic - Determination of tensile stress-strain properties".

A compression set in the thickness direction of the midsole 3 is preferably 70% or less in order to prolong the lifetime of the shoe 1. The aforementioned compression set is more preferably 65% or less. It is not easy to bring the midsole 3 into a state where it does not cause compression set, and the aforementioned compression set is typically 1% or more. The compression set herein means a value measured on the basis of the ASTM D395A method (i.e., constant load method), the value being able to be obtained by applying a pressure of 0.59 MPa to a measurement sample for 22 hours at a temperature of 23 °C, and measuring the thickness of the measurement sample after a lapse of 24 hours after the measurement sample is release from the pressure.

In order to allow the shoe 1 to exhibit excellent lightweight properties, the midsole 3 of this embodiment is preferably composed of a foam having a density value of 0.5 g/cm³ or less, which is measured by the method A "Underwater displacement" of JIS K 7112 at a temperature of 23 °C. The density of the foam is more preferably 0.4 g/cm³ or less, still more preferably 0.3 g/cm³ or less, particularly preferably 0.2 g/cm³ or less. The density can be measured using a densimeter having a mechanism for preventing floating of samples, and can be measured, for example, using a commercially available densimeter from Alfa Mirage Co., Ltd., as a high-precision electronic densimeter.

The foam constituting the midsole 3 of this embodiment preferably has a high tear strength while having the aforementioned density. The tear strength of the foam is preferably 5 N/mm or more, more preferably 6 N/mm or more. The tear strength of the foam can be measured according to JIS K6252. More specifically, the tear strength can be obtained under the following conditions.

### (Measurement Conditions of Tear Strength)

Measuring instrument: Product name "STROGRAPH-R2" manufactured by Toyo Seiki Seisaku-sho, Ltd.
Shape of test piece: Angle type test piece (without a nick) specified in JIS K 6252
Test speed: 500 mm/min

In order to allow the midsole 3 to exhibit the aforementioned excellent strength, the polymer composition of this embodiment includes an inorganic filler in addition to cellulose nanofibers. The polymer composition of this embodiment includes one or more of the inorganic fillers selected from the group consisting of magnesium carbonate particles, calcium carbonate particles, silica particles, and talc particles. The shoe member composed of the polymer composition of this embodiment exhibits excellent strength by the synergetic effect of the cellulose nanofibers and the aforementioned inorganic filler.

As the cellulose nanofibers, those derived from, for example, plants, animals, algae, microorganisms, and microbial products can be adopted. The cellulose nanofibers are preferably derived from plants. The plant as the raw material of the cellulose nanofibers may be a plant itself, a processed product obtained by processing a plant, or waste or the like that is no longer necessary. More specifically, examples of the plant that serves as the raw material of the cellulose nanofibers include wood, bamboo, hemp, jute, kenaf, pulp (e.g., Nadelholz unbleached kraft pulp (NUKP), Nadelholz bleached kraft pulp (NBKP), Laubholz unbleached kraft pulp (LUKP), Laubholz bleached kraft pulp (LBKP), Nadelholz unbleached sulfite pulp (NUSP), Nadelholz bleached sulfite pulp (NBSP), thermomechanical pulp (TMP), recycled pulp, waste paper), and yarns, fabrics, and agricultural wastes.

The cellulose nanofibers are included in the polymer composition preferably at a ratio of 1 mass % or more, more preferably at a ratio of 2 mass % or more, further preferably at a ratio of 3 mass % or more. The cellulose nanofibers are included in the polymer composition preferably at a ratio of 20 mass % or less, more preferably 16 mass % or less, further preferably 12 mass % or less.

Part of the cellulose nanofibers included in the polymer composition may be of a nano size, and not all of them need to be of a nano size. That is, the cellulose nanofibers do not need to be entirely of a nano size before being mixed with, for example, the polymer. In general, a plant is composed of plant fibers each having a diameter of 1 µm or more, and one of the plant fibers is formed by a bundle of a plurality of cellulose nanofibers. The cellulose nanofibers before the polymer composition is prepared may be in such a bundle state. That is, the cellulose nanofibers may form bundles each having a diameter of about 10 to 100 µm in the state before the polymer composition is prepared.

On the other hand, the cellulose nanofibers in the polymer composition before forming the midsole 3 or in the polymer composition in the state of forming the midsole 3 preferably have an average fiber diameter of 1 nm or more and 400 nm or less. The average fiber diameter of the cellulose nanofibers in the polymer composition before forming the midsole 3 or the average fiber diameter of the cellulose nanofibers in the midsole 3 is more preferably 200 nm or less. The average length of the cellulose nanofibers is preferably about 10 times to 1000 times as large as the average fiber diameter thereof. The diameter and the length of the cellulose nanofibers can be directly measured using a transmission electron microscope (TEM) or an atomic force microscope (AFM). More specifically, the average fiber diameter of the cellulose nanofibers can be determined by taking photos of a plurality of views using such a microscope as abovementioned, measuring the diameter of a plurality of (for example 50) fibers at randomly selected positions in the obtained images, and arithmetically averaging the obtained measured values. The average length of the cellulose nanofibers can be determined by randomly selecting a plurality of (for example 50) cellulose nanofibers of which the entire lengths can be measured in images captured by the transmission electron microscope (TEM) or the atomic force microfiber (AFM) in the same manner as in the average fiber dimeter, and measuring the lengths of the selected cellulose nanofibers. The average length can also be determined as an arithmetic average of the measured values, similar to the case of the average fiber diameter. The length of the cellulose nanofibers in the aforementioned microscopic observation in the state where the cellulose nanofibers are observed in a curved state means not a linear distance between both ends of the cellulose nanofibers but a dimension from one end to the other end measured along the curve.

The cellulose nanofibers may be a modified product or a non-modified product, but are preferably hydrophobized by modification. As the hydrophobically modified cellulose nanofibers, for example, adopted can be those cellulose nanofibers in which one or more of a plurality of hydroxy groups in the molecular structure of cellulose are substituted with a substituent including a hydrophobic group having a hydrophobicity higher than the hydroxy group.

The hydrophobized cellulose nanofibers hardly agglutinate compared with non-modified cellulose nanofibers and exhibit excellent dispersibility when the polymer composition is prepared. In order to exhibit an affinity to both of the base polymer and the inorganic filler (i.e., magnesium carbonate particles, calcium carbonate particles, silica particles, and talc particles) of the polymer composition, the cellulose nanofibers may not necessarily be completely hydrophobized in which the hydroxy group bonded to a tetrahydropyran ring to form a pyranose ring is preferably partly remained. That is, in the polymer composition constituting the midsole 3 of this embodiment, it is preferable that one or more of the plurality of hydroxy groups in the molecular structure of cellulose bonded to the tetrahydropyran ring be substituted with a substituent, and the cellulose nanofibers with one or more of the hydroxy groups remained therein be included.

Examples of the substituent include the hydrophobic group such as an alkyl group, an alkenyl group, an alkylene group, an alkenylene group, and an arylene group. The substituent can be the hydrophobic group directly bonded to the tetrahydropyran ring or the hydrophobic group having an ether bond or ester bond to the tetrahydropyran ring. That is, the substituent can be, for example, an alkyl ether group, an alkenyl ether group, an alkylene ether group, an alkenylene ether group, and an arylene ether group. Also, the substituent can be, for example, an alkyl ester group, an alkenyl ester group, an alkylene ester group, an alkenylene ester group, and an arylene ester group.

In the polymer composition, one type of the aforementioned cellulose nanofibers can be included individually, or two or more types of them can be included. That is, the polymer composition can include two or more different types of cellulose nanofibers respectively having an average fiber diameter and an average length, include two or more different types of cellulose nanofibers having a different starting raw material, or include hydrophobized cellulose nanofibers and non-hydrophobized cellulose nanofibers.

The inorganic filler (i.e., magnesium carbonate particles, calcium carbonate particles, silica particles, and talc particles) can be included in the polymer composition so that a mass ratio of the total amount thereof (i.e., total amount of magnesium carbonate particles, calcium carbonate particles, silica particles, and talc particles) to the cellulose nanofibers is 0.1 times to 10 times. The total content of the inorganic filler in the polymer composition can be 0.2 times or more, or 0.3 times or more, based on the cellulose nanofibers. The total content of the inorganic filler in the polymer composition can be 9 times or less, or 8 times or less, based on the cellulose nanofibers.

The inorganic filler can be, for example, a non-treated inorganic filler without being subjected to a surface treatment, or an inorganic filler subjected to a surface treatment with a fatty acid, a fatty acid ester, a silane coupling agent, or a titanate coupling agent.

Examples of the fatty acid include: saturated fatty acid or unsaturated fatty acid, such as lauric acid, myristic acid, palmitic acid, stearic acid, oleic acid, tallow acid, palm fatty acid, coconut fatty acid, soybean fatty acid, naphthenic acid, abietic acid, and neoabietic acid. Examples of the fatty acid ester include methyl ester, ethyl ester, propyl ester, isopropyl ester, butyl ester, sec-butyl ester, and tert-butyl ester of the aforementioned fatty acid. Examples of salt of the fatty acid include: alkali metal salt such as sodium salt and potassium salt: alkaline-earth metal salt such as calcium salt and magnesium salt; aluminum salt; iron salt; zinc salt; and ammonium salt.

Examples of the silane coupling agent include 3-methacryloxypropyltriethoxysilane, 3-methacryloxypropyltrimethoxysilane, vinyltriethoxysilane, vinyltrimethoxysilane, phenyltrimethoxysilane, 3-isocyanatepropyltriethoxysilane, and 2-(3,4-epoxycyclohexyl)ethyltrimethoxysilane. Examples of the titanate coupling agent include tetrakis[2,2-bis(allyloxymethyl)butoxy]titanium (IV), diisopropoxy titanium diisostearate, (2-n-butoxycarbonylbenzoyloxy)tributoxy titanium, isopropyl titanium triisostearate, dinormal butoxy bis(triethanolaminato)titanium, tetrakis(2-ethylhexyloxy)titanium, and diisopropoxy bis(acetylacetonato)titanium.

In order to achieve excellent workability at the time of preparing the polymer composition and suppress the deterioration of the base polymer in the polymer composition, the average particle diameter (i.e., the median diameter (D50) on a volume basis) determined by a laser diffraction/scattering method of the inorganic filler is preferably 0.1 µm or more, more preferably 0.2 µm or more. The aforementioned average particle diameter can be 0.5 µm or more. The aforementioned average particle diameter is preferably 20 µm or less in order to enable the polymer composition to exhibit excellent strength. The aforementioned average particle diameter is more preferably 18 µm or less, still more preferably 16 µm or less.

The magnesium carbonate particles can be a natural product such as pulverized magnesite ores, but preferably a synthetic product obtained by reaction of magnesium salt aqueous solution with carbonate such as sodium carbonate or potassium carbonate. The magnesium carbonate particles can include anhydrous magnesium carbonate or include hydrate referred to as basic magnesium carbonate. That is, the magnesium carbonate particles can be particles composed of a compound represented by "MgC03" or particles composed of a compound represented by "mMgCO_{3 ·} Mg(OH)_{2 ·} nH₂O" (m = 3 to 5, n = 3 to 7).

The calcium carbonate particles can be a natural product (ground calcium carbonate particles) such as pulverized limestone or shell. The calcium carbonate particles can be precipitated calcium carbonate particles obtained by chemical reaction. The calcium carbonate particles can be in a crystalline form in which calcium carbonate is calcite, aragonite, or vaterite. The calcium carbonate particles preferably include calcium carbonate in a crystalline form of calcite having a lower hardness and a lower density than the other crystalline forms.

The silica particles can be dry silica particles obtained by the flame method or the arc method, or can be wet silica particles obtained by the precipitation method or the gel method.

The talc particles can be pulverized talc. The talc particles can be particles composed of a compound represented by "Mg₃Si₄O₁₀(OH)₂".

The polymer composition of this embodiment can include all four types out of the magnesium carbonate particles, the calcium carbonate particles, the silica particles, and the talc particles, three types out of them, two types out of them, or only one type out of them. The polymer composition of this embodiment preferably includes at least the calcium carbonate particles.

The polymer composition of this embodiment can include inorganic filler such as alumina particles other than the aforementioned inorganic filler, but the content of the other inorganic filler is preferably at a mass ratio of 1/5 or less of the total content of the magnesium carbonate particles, the calcium carbonate particles, the silica particles, and the talc particles, more preferably at a mass ratio of 1/10 or less.

The polymer serving as a main component of the polymer composition is not particularly limited and can be selected from various polymers according to the characteristic value required for the member composed of the polymer composition. Examples of the polymer of this embodiment include: a polyethylene resin such as a low-density polyethylene resin (LDPE), a linear low-density polyethylene resin (LLDPE), or a high density polyethylene resin (HDPE); a polypropylene resin such as a propylene homopolymer (homo PP), a random polypropylene resin (random PP), or a block polypropylene resin (block PP); an ethylene-α-olefin copolymer such as an ethylene-propylene copolymer, an ethylene-butene copolymer, an ethylene-hexene copolymer, or an ethylene-octene copolymer; a propylene-α-olefin copolymer such as a propylene-butene copolymer, a propylene-hexene copolymer, or a propylene-octene copolymer; a cyclic olefin polymer (COP); and a cyclic olefin copolymer (COC).

The polymer can be, for example, an ethylene-4-methyl-pentene copolymer, a propylene-4-methyl-1-pentene copolymer, a butene-4-methyl-1-pentene copolymer, an ethylene-methyl methacrylate copolymer, an ethylene-ethyl methacrylate copolymer, an ethylene-butyl methacrylate copolymer, an ethylene-methyl acrylate copolymer, an ethylene-ethyl acrylate copolymer, an ethylene-butyl acrylate copolymer, a propylene-methacrylate copolymer, a propylene-methyl methacrylate copolymer, a propylene-ethyl methacrylate copolymer, a propylene-butyl methacrylate copolymer, an ethylene-vinyl acetate copolymer (EVA), or a propylene-vinyl acetate copolymer.

The polymer can be, for example, a polyurethane-based polymer such as a polyester-based polyurethane resin or a polyether-based polyurethane resin; or a styrene-based polymer such as a styrene-ethylene-butylene copolymer (SEB), a styrene-butadiene-styrene copolymer (SBS), a hydrogenated product of SBS (styrene-ethylene-butylene-styrene copolymer (SEBS)), a styrene-isoprene-styrene copolymer (SIS), a hydrogenated product of SIS (styrene-ethylene-propylene-styrene copolymer (SEPS)), a styrene-isobutylene-styrene copolymer (SIBS), a styrene-butadiene-styrene-butadiene copolymer (SBSB), a styrene-butadiene-styrene-butadiene-styrene copolymer (SBSBS), a polystyrene, an acrylonitrile styrene resin (AS resin), an acrylonitrile butadiene styrene resin (ABS resin), or a styrene-based thermoplastic elastomer (TPS).

Examples of the polymer include a fluorine-based polymer such as fluororesin or fluororubber; a polyamide-based polymer such as a polyamide-based elastomer or a polyamide resin such as polyamide 6, polyamide 11, polyamide 12, polyamide 6,6, or polyamide 610; a polyester-based resin such as polyethylene terephthalate or polybutylene terephthalate; a polyvinyl chloride resin; an acrylic resin such as polymethyl methacrylate; a silicone-based elastomer; butadiene rubber (BR); isoprene rubber (IR); chloroprene (CR); natural rubber (NR); styrene butadiene rubber (SBR); acrylonitrile butadiene rubber (NBR); and butyl rubber (IIR).

In the polymer composition constituting the midsole 3 of this embodiment, one of the aforementioned polymers can be included individually, or two or more of them can be included.

The polymer composition preferably includes an olefin-based copolymer such as the ethylene-α-olefin copolymer or the propylene-α-olefin copolymer, or the ethylene-vinyl acetate copolymer, in order to enable the cellulose nanofibers and the inorganic filler (i.e., magnesium carbonate particles, calcium carbonate particles, silica particles, and talc particles) to more significantly exhibit the reinforcing effect. The olefin-based copolymer can be a random copolymer or a block copolymer. That is, the polymer composition preferably includes any one of an olefin-based random copolymer (POE), an olefin-based block copolymer (OBC), and an ethylene-vinyl acetate copolymer (EVA). More specifically, the polymer composition preferably includes any one of an ethylene-α-olefin random copolymer, an ethylene-α-olefin block copolymer, a propylene-α-olefin random copolymer, a propylene-α-olefin block copolymer, and an ethylene-vinyl acetate copolymer.

The polymer composition preferably includes all the three copolymers, that is, the olefin-based random copolymer, the olefin-based block copolymer, and the ethylene-vinyl acetate copolymer. The polymer composition more preferably includes three polymers, that is, the ethylene-α-olefin random copolymer, the ethylene-α-olefin block copolymer, and the ethylene-vinyl acetate copolymer.

The member composed of the polymer composition including all the three copolymers, that is, the olefin-based random copolymer, the olefin-based block copolymer, and the ethylene-vinyl acetate copolymer, comes into a state where it includes fine crystals of ethylene or propylene in a matrix composed of amorphous polymer. The member including, for example, the ethylene-α-olefin random copolymer, the ethylene-α-olefin block copolymer, and the ethylene-vinyl acetate copolymer, includes the cellulose nanofibers and the inorganic filler in the amorphous region, while forming fine crystals by polyethylene portions in a molecular chain of the polymer, to thereby exhibit excellent mechanical strength.

The ratio of the olefin-based random copolymer based on the total content of the olefin-based random copolymer, the olefin-based block copolymer, and the ethylene-vinyl acetate copolymer is, for example, preferably 10 mass% or more, more preferably 20 mass% or more. The aforementioned ratio of the olefin-based random copolymer is preferably 45 mass% or less, more preferably 40 mass% or less.

The ratio of the olefin-based block copolymer based on the total content of the olefin-based random copolymer, the olefin-based block copolymer, and the ethylene-vinyl acetate copolymer is, for example, preferably 10 mass% or more, more preferably 20 mass% or more. The aforementioned ratio of the olefin-based block copolymer is preferably 45 mass% or less, more preferably 40 mass% or less.

The ratio of the ethylene-vinyl acetate copolymer based on the total content of the olefin-based random copolymer, the olefin-based block copolymer, and the ethylene-vinyl acetate copolymer is, for example, preferably 10 mass% or more, more preferably 20 mass% or more. The aforementioned ratio of the ethylene-vinyl acetate copolymer is preferably 45 mass% or less, more preferably 40 mass% or less.

The olefin-based random copolymer can suitably function as a polymer to form the amorphous region. Accordingly, it is preferable that the olefin-based random copolymer have a low crystallinity and be the ethylene-α-olefin copolymer having a density of more than 0.88 g/cm³ and less than 0.91 g/cm³. The olefin-based random copolymer preferably has a melting point (i.e., melting peak temperature) determined by the DSC method (heating rate of 10 °C/min) of 55 °C or more and 77 °C or less.

The olefin-based block copolymer is suitable as a polymer for forming fine crystals of olefin. The olefin-based block copolymer is preferably the ethylene-α-olefin block copolymer, and preferably either an ethylene-hexene block copolymer or an ethylene-octene block copolymer. It is more preferable that the olefin-based block copolymer included in the polymer composition in this embodiment be the ethylene-octene block copolymer. The olefin-based block copolymer is preferably a chain shuttling copolymer obtained by polymerization of ethylene and α-olefin having 4 or more carbon atoms in the presence of two different polymerization catalysts and a chain transfer agent (i.e., shuttling agent described in WO 2005/090426 and WO 2005/090427) such as alkylaluminum or alkyl zinc compound.

During the polymerization of the chain shuttling copolymer, each of homopolymerization and block copolymerization is repeated multiple times, so that blocks formed during the proceeding of the homopolymerization enable to form crystals similar to crystals obtained by forming a homopolymer from monomers that constitute each block, unlike the common block copolymer. Specifically, the chain shuttling copolymer of ethylene and 1-octene block includes, in a molecule, ethylene blocks capable of being crystallized similarly to high density polyethylene (HDPE) which is an ethylene homopolymer. Accordingly, the ethylene-octene block copolymer, which is a chain shuttling copolymer, effectively functions to form many microcrystals, which are the same as crystals of the high density polyethylene, in the member composed of the polymer composition. In other words, the ethylene-α-olefin block copolymer preferably has a melting point similar to that of the high density polyethylene (HDPE), and a melting point (melting peak temperature) of the ethylene-α-olefin block copolymer obtained by the DSC method (heating rate of 10 °C/min) is preferably 115 °C or more and 125 °C or less.

The ethylene-vinyl acetate copolymer is preferably random copolymer. In order to enable the polymer composition to exhibit flexibility and adhesiveness, the content ratio of vinyl acetate (VA content) of the ethylene-vinyl acetate copolymer is preferably 8 mass% or more, more preferably 10 mass% or more. The aforementioned content ratio of vinyl acetate is preferably 35 mass% or less, more preferably 30 mass% or less.

In the case where the midsole 3 of this embodiment is composed of a foam, the polymer composition used for forming the midsole 3 can include a foaming agent.

As the foaming agent, for example, employed can be a thermally decomposable organic foaming agent such as an azo compound such as azodicarbonamide (ADCA), 1,1'-azobis(1-acetoxy-1-phenylethane), dimethyl-2,2'-azobisbutyrate, dimethyl-2,2'-azobisisobutyrate, 2,2'-azobis(2,4,4-trimethylpentane), 1,1'-azobis(cyclohexane-1-carbonitrile), or 2,2'-azobis[N-(2-carboxyethyl)-2-methyl-propionamidine]; a nitroso compound such as N,N'-dinitrosopentamethylenetetramine (DPT); a hydrazine derivative such as 4,4'-oxybis(benzenesulfonylhydrazide) or diphenylsulfone-3,3'-disulfonylhydrazide; a semicarbazide compound such as p-toluenesulfonyl semicarbazide; or an organic heat decomposable foaming agent such as trihydrazinotriazine.

The foaming agent can be, for example, a thermally decomposable inorganic foaming agent such as: a bicarbonate such as sodium bicarbonate or ammonium bicarbonate, or a carbonate such as sodium carbonate or ammonium carbonate; a nitrite such as ammonium nitrite; or a hydrogen compound.

In the case where the foaming agent is a thermally decomposable foaming agent as described above, the polymer composition can include, for example, a foaming aid such as a metal oxide-based foaming aid like zinc oxide, a urea-based foaming aid, a salicylic foaming aid, or a benzoic foaming aid.

The foaming agent can be, for example, an organic foaming agent of aliphatic hydrocarbons such as methanol, ethanol, propane, butane, pentane, or hexane, or an inorganic foaming agent such as air, carbon dioxide, nitrogen, argon, or water.

The midsole 3 of this embodiment can be composed of a crosslinked foam. That is, the midsole 3 of this embodiment can be composed of a polymer composition in a crosslinked state. Accordingly, the polymer composition used for forming the midsole 3 can include a crosslinking agent or a crosslinking aid.

Examples of the crosslinking agent include an organic peroxide such as dicumyl peroxide, di-t-butyl peroxide, 2,5-dimethyl-2,5-di-(t-butylperoxy)hexane, 2,5-dimethyl-2,5-di-(t-butylperoxy)hexane-3, 1,3-bis(t-butylperoxyisopropyl)benzene, 1,1-bis(t-butylperoxy)-3,3,5-trimethylcyclohexane, n-butyl-4,4-bis(t-butylperoxy)valerate, benzoyl peroxide, p-chlorobenzoyl peroxide, 2,4-dichlorobenzoyl peroxide, t-butyl peroxybenzoate, t-butylperoxyisopropyl carbonate, diacetyl peroxide, lauroyl peroxide, and t-butylcumyl peroxide.

Examples of the crosslinking aid include divinylbenzene, trimethylolpropane trimethacrylate, 1,6-hexanediol methacrylate, 1,9-nonanediol dimethacrylate, 1,10-decanediol dimethacrylate, triallyl trimellitate ester, triallyl cyanurate (TAC), triallyl isocyanurate (TAIC), neopentylglycol dimethacrylate, triallyl 1,2,4-benzenetricarboxylate ester, tricyclodecane dimethacrylate, and polyethyleneglycol diacrylate.

In addition to the above, the polymer composition can include additives such as an antiaging agent, an antioxidant, a weather-proof agent, an ultraviolet absorbent, a light stabilizer, a flame retardant, a pigment, a mold releasing agent, an electrostatic preventing agent, an antimicrobial agent, a fungicidal agent, a deodorizer, a fragrance, and the like. The polymer composition can include, as the additives, an adhesion improving agent such as a rosin or an acid-modified polymer. Among them, the acid-modified polymer is suitable since the acid-modified polymer used in combination with the inorganic filler and the cellulose nanofibers improves the strength of the polymer composition for forming the midsole 3. Examples of the acid-modified polymer include a copolymer of a polar monomer such as maleic acid anhydride or maleic acid ester, and an olefin-based monomer such as ethylene, propylene, or α-olefin having 4 or more carbon atoms. The copolymer may be a block copolymer or a random copolymer, in which the polar polymer constitutes a main chain, or a graft copolymer, in which the polar polymer constitutes a side chain. The copolymer may be a copolymer including three or more monomers composed of a plurality of olefin-based monomers and one or more polar monomers, as constituent units. The total amount of the additives is generally set at a ratio of 5 mass% or less of the polymer composition.

The midsole 3 of this embodiment can be produced by, for example, preparing a mixed raw material including the polymer, the cellulose nanofibers, and the inorganic filler (i.e., magnesium carbonate particles, calcium carbonate particles, silica particles, and talc particles) and, as needed, the crosslinking agent and the foaming agent, followed by melt-kneading of the mixed raw material to prepare the polymer composition, and then molding the polymer composition in a forming mold.

This embodiment is described by taking, for example, the case where the polymer composition serves as a material for forming the midsole 3, but the polymer composition can serve as a material for forming a shoe member other than the midsole. The polymer composition of this embodiment can serve as a material for forming a shoe member such as the outsole 4, a shank, a heel counter, as described above. The member such as the midsole, the outsole 4, the shank, and the heel counter can be composed of only the polymer composition, or can be a composite of the member composed of the polymer composition and another member such as a fiber sheet or a resin film. Further, the shoe member of this embodiment can be composed of two or more different polymer compositions including a first polymer composition and a second polymer composition different from the first polymer composition. That is, the shoe member can be formed by one portion composed of the first polymer composition and the other portion composed of the second polymer composition. Thus, the present invention is not limited to the aforementioned exemplification in any way.

### Examples

Next, the present invention will be described in more detail by way of Examples, without limitation thereto.

### <Compound materials>

The following compound materials were prepared for preparing polymer compositions.

### 1) Ethylene-α-olefin block copolymer (OBC)

Ethylene-α-olefin block copolymer (OBC) that is a chain shuttling copolymer including ethylene and α-olefin as constituent units and having a melting point (mp) of 119 °C

### 2) Ethylene-vinyl acetate copolymer (EVA)

Ethylene-vinyl acetate copolymer having a vinyl acetate content (VA) of 25 mass% and a melting point (mp) of 77 °C

### 3) Inorganic filler

- Calcium carbonate particles (CaC03)
- Wet (precipitation method) silica particles (Precipitated silica)
- Dry (flame method) silica particles (Fumed silica)
- Magnesium carbonate particles (MgCO₃)
- Talc particles

### 4) Cellulose nanofibers

### 5) Various additives

- Activator: zinc oxide, stearic acid
- Crosslinking agent: dicumyl peroxide (DCP), triallyl isocyanurate (TAIC) containing agent (TAIC content of 60 mass%)
- Foaming agent: thermally decomposable organic foaming agent (azodicarbonamide (ADCA))
- Acid-modified PE (Maleic acid-modified polyethylene)

### <Evaluation 1: Preparation of "Foam 1-0">

As shown in Table 1, a foam including a polymer which is crosslinked without including an inorganic filler and cellulose nanofibers was produced using the above compound materials. The results of measuring the hardness (i.e., the Asker C hardness), the specific gravity, the tensile strength, and the tear strength (i.e., the tear strength obtained by an angle type test piece without a nick) of the foam are also shown in Table 1.

### <Evaluation 2: Preparation of "Foam 1-1" to "Foam 1-5">

Foams were prepared in the same manner as in "Foam 1-0" except that the inorganic filler at a ratio shown in Table 1 was included, followed by measurement of the respective physical properties in the same manner as that for "Foam 1-0". The results are shown in Table 1.

### <Evaluation 3: Preparation of "Foam 2-0">

A foam was prepared in the same manner as in "Foam 1-0" except that cellulose nanofibers at a ratio shown in Table 1 were included, followed by measurement of the respective physical properties in the same manner as that for "Foam 1-0". The results are shown in Table 1.

### <Evaluation 4: Preparation of "Foam 2-1" to "Foam 2-5">

A foam was prepared in the same manner as in "Foam 1-0" except that both of the inorganic filler and the cellulose nanofibers at ratios shown in Table 1 were included, followed by measurement of the respective physical properties in the same manner as that for "Foam 1-0". The results are shown in Table 1.

### <Evaluation 5: Preparation of "Foam 3-0">

A foam was prepared in the same manner as in "Foam 1-0" except that an acid-modified PE and the cellulose nanofibers at ratios shown in Table 1 were included, followed by measurement of the respective physical properties in the same manner as that for "Foam 1-0". The results are shown in Table 1.

### <Evaluation 6: Preparation of "Foam 3-1", "Foam 3-2", and "Foam 3-4">

Foams were prepared in the same manner as in "Foam 1-0" except that the acid-modified PE, the inorganic filler, and the cellulose nanofibers at ratios shown in Table 1 were included, followed by measurement of the respective physical properties in the same manner as that for "Foam 1-0". The results are shown in Table 1.

### <Evaluation 7: Study by metal particles>

An attempt was made to prepare a foam using metal particles instead of the inorganic filler (i.e., magnesium carbonate particles, calcium carbonate particles, silica particles, and talc particles) in Evaluation 4 ("Foam 2-1" to "Foam 2-5"). However, a foam in a good foaming state was failed to be produced even though the same method as in the above evaluations was adopted to produce a foam including metal particles. Therefore, the respective physical properties were not measured in this evaluation.

### <Calculation of tensile strength ratio>

Among the foams ("Foam 1-1" to "Foam 1-5") including only the inorganic filler prepared in "Evaluation 2" and the foams ("Foam 2-1" to "Foam 2-5") including both of the inorganic filler and the cellulose nanofibers prepared in "Evaluation 4", a comparison was made for the foams using the same inorganic filler in terms of "tensile strength" to calculate how high or low the tensile strength was changed depending on the presence or absence of the cellulose nanofibers, and the obtained ratio was referred to as a "tensile strength ratio". In the same way, the "tensile strength ratio" depending on the presence or absence of the acid-modified PE was calculated for the foams prepared in "Evaluation 4" and the foams prepared in "Evaluation 6".

### <Calculation of tear strength ratio>

Regarding the "tear strength", a "tear strength ratio" was calculated in the same manner as the aforementioned "tensile strength ratio".

**Table 1**

| | | 1-0 | 1-1 | 1-2 | 1-3 | 1-4 | 1-5 |
|---|---|---|---|---|---|---|---|
| OBC | mp=119 °C | 90 | 90 | 90 | 90 | 90 | 90 |
| EVA | VA=25%,mp=77 °C | 10 | 10 | 10 | 10 | 10 | 10 |
| Filler | CaCO₃ | | 4 | | | | |
| Filler | SiO₂ (Precipitated silica) | | | 4 | | | |
| Filler | SiO₂(Fumed silica) | | | | 4 | | |
| Filler | MgCO₃ | | | | | 4 | |
| Filler | Talc | | | | | | 4 |
| Activator | ac-ZnO | 2.0 | 2.0 | 2.0 | 2.0 | 2.0 | 2.0 |
| Activator | Stearic acid | 1.0 | 1.0 | 1.0 | 1.0 | 1.0 | 1.0 |
| Crosslinking agent | DCP | 0.8 | 0.8 | 0.8 | 0.8 | 0.8 | 0.8 |
| Crosslinking agent TAIC(60%) | | 0.2 | 0.2 | 0.2 | 0.2 | 0.2 | 0.1 |
| Foaming agent | ADCA | 4.0 | 4.0 | 4.0 | 4.0 | 4.0 | 4.0 |
| 1-a | Hardness [°] | 39 | 40 | 41 | 43 | 40 | 39 |
| 1-b | Specific gravity [-] | 0.18 | 0.18 | 0.18 | 0.18 | 0.18 | 0.18 |
| 1-c | Tensile strength [N/mm²] | 1.4 | 1.4 | 1.5 | 1.6 | 1.3 | 1.3 |
| 1-d | Elongation at break [%] | 200 | 210 | 190 | 180 | 220 | 240 |
| 1-e | Tensile elastic modulus [N/mm²] | 0.8 | 0.8 | 1.1 | 1.3 | 1.0 | 0.9 |
| 1-f | Tear strength [N/mm] | 5.3 | 5.3 | 5.4 | 5.6 | 5.1 | 5.0 |
| | | 2-0 | 2-1 | 2-2 | 2-3 | 2-4 | 2-5 |
| OBC | mp=119 °C | 90 | 90 | 90 | 90 | 90 | 90 |
| EVA | VA=25%,mp=77C | 10 | 10 | 10 | 10 | 10 | 10 |
| - | CNF | 6 | 6 | 6 | 6 | 6 | 6 |
| Filler | CaCO₃ | | 4 | | | | |
| Filler | SiO₂ (Precipitated silica) | | | 4 | | | |
| Filler | SiO₂(Fumed silica) | | | | 4 | | |
| Filler | MgCO₃ | | | | | 4 | |
| Filler | Talc | | | | | | 4 |
| Activator | ac-ZnO | 2.5 | 2.5 | 2.5 | 2.5 | 2.5 | 2.5 |
| Activator | Stearic acid | 1.0 | 1.0 | 1.0 | 1.0 | 1.0 | 1.0 |
| Crosslinking agent | DCP | 0.8 | 0.8 | 0.8 | 0.8 | 0.8 | 0.8 |
| Crosslinking agent TAIC(60%) | | 0.2 | 0.2 | 0.2 | 0.2 | 0.2 | 0.2 |
| Foaming agent | ADCA | 5.0 | 5.0 | 5.0 | 5.0 | 5.0 | 5.0 |
| 2-a | Hardness [°] | 45 | 46 | 47 | 49 | 46 | 46 |
| 2-b | Specific gravity [-] | 0.16 | 0.16 | 0.16 | 0.16 | 0.16 | 0.16 |
| 2-c | Tensile strength [N/mm²] | 1.7 | 1.8 | 1.9 | 2.0 | 1.7 | 1.8 |
| 2-d | Elongation at break [%] | 180 | 200 | 220 | 220 | 240 | 250 |
| 2-e | Tensile elastic modulus [N/mm²] | 1.8 | 1.9 | 2.0 | 2.3 | 1.9 | 2.0 |
| 2-f | Tear strength [N/mm] | 6.8 | 7.2 | 7.2 | 7.5 | 7.3 | 7.1 |
| Tensile strength ratio | [ (2-c/ 1-c) ×100% ] | - | 129 | 127 | 125 | 131 | 138 |
| Tear strength ratio [ | (2-f / 1-f) ×100% ] | - | 136 | 133 | 134 | 143 | 142 |
| | | 3-0 | 3-1 | 3-2 | | 3-4 | |
| OBC | mp=119 °C | 90 | 90 | 90 | | 90 | |
| EVA | VA=25%,mp=77 °C | 10 | 10 | 10 | | 10 | |
| Acid-modified PE | | 1 | 1 | 1 | | 1 | |
| - | CNF | 6 | 6 | 6 | | 6 | |
| Filler | CaCO₃ | | 4 | | | | |
| Filler | SiO₂ (Precipitated silica) | | | 4 | | | |
| Filler | MgCO₃ | | | | | 4 | |
| Activator | ac-ZnO | 2.6 | 2.6 | 2.6 | | 2.6 | |
| Activator | Stearic acid | 1.0 | 1.0 | 1.0 | | 1.0 | |
| Crosslinking agent | DCP | 0.8 | 0.8 | 0.8 | | 0.8 | |
| Crosslinking agent | TAIC(60%) | 0.2 | 0.2 | 0.2 | | 0.2 | |
| Foaming agent | ADCA | 5.2 | 5.2 | 5.2 | | 5.2 | |
| 3-a | Hardness [°] | 46 | 46 | 48 | | 47 | |
| 3-b | Specific gravity [-] | 0.16 | 0.16 | 0.16 | | 0.16 | |
| 3-c | Tensile strength [N/mm²] | 1.9 | 2.0 | 1.9 | | 1.8 | |
| 3-d | Elongation at break [%] | 200 | 220 | 240 | | 220 | |
| 3-e | Tensile elastic modulus [N/mm²] | 1.9 | 1.9 | 2.1 | | 2.0 | |
| 3-f | Tear strength [N/mm] | 7.6 | 7.7 | 7.7 | | 7.4 | |
| Tensile strength ratio [ (3-c / 2-c) ×100% ] | | - | 111 | 100 | | 106 | |
| Tear strength ratio [ (3-f / 2-f) ×100% ] | | - | 107 | 107 | | 101 | |

It is evident from the "tensile strength ratio" and the "tear strength ratio" in Table 1 that a high reinforcing effect occurs in the foam of each of the cases corresponding to Examples of the present invention (i.e., "Foam 2-1" to "Foam 2-5", "Foam 3-1", "Foam 3-2", and "Foam 3-4"). That is, it is evident that, according to the present invention, a shoe member excellent in strength can be provided.

### REFERENCE SIGNS LIST

1: Shoe
2: Upper
3: Midsole
4: Outsole

## Claims

1. A shoe member composed of a polymer composition, wherein
the polymer composition comprises at least one or more of polymers, at least one or more of cellulose nanofibers, and at least one or more of inorganic fillers, and
the polymer composition comprises one or more of the inorganic fillers selected from the group consisting of magnesium carbonate particles, calcium carbonate particles, silica particles, and talc particles.

2. The shoe member according to claim 1, wherein
the polymer composition comprises at least the calcium carbonate particles out of the magnesium carbonate particles, the calcium carbonate particles, the silica particles, and the talc particles.

3. The shoe member according to claim 1 or 2, wherein
the polymer composition comprises one or more of the polymers selected from the group consisting of an olefin-based random copolymer, an olefin-based block copolymer, and an ethylene-vinyl acetate copolymer.

4. The shoe member according to claim 3, wherein
the polymer composition comprises all of the olefin-based random copolymer, the olefin-based block copolymer, and the ethylene-vinyl acetate copolymer.

5. A shoe comprising the shoe member according to any one of claims 1 to 4.
